# EUROPEAN PATENT APPLICATION

(11) **EP 2 257 042 A1**
(43) Date of publication of application: **01.12.2010**
(21) Application number: 10158702.0
(22) Date of filing: 31.03.2010
(51) Int. Cl.: H04N 5/14

(54) **Determining a regional shot-change parameter**

(30) Priority: 27.05.2009 GB 0909063
(71) Applicant: Snell Limited, Hartman House Danehill Lower Earley Reading Berkshire RG6 4PB (GB)
(72) Inventor: Diggins, Jonathan, Eastleigh Hampshire SO50 9EA (GB)
(74) Representative: Garratt, Peter Douglas

(57) **Abstract**

To determine a regional shot-change parameter for an image identified as a whole as a shot change image, a difference is taken between each pixel in that image and a spatially equivalent pixel in an adjacent image in the sequence. A pixel is flagged as a shot-change pixel when the difference for that pixel and around three of the spatially adjacent pixels exceed a threshold. If a pixel is spatially isolated from other shot-change pixels, it is not regarded as a shot-change pixel.

## Description

### FIELD OF INVENTION

This invention concerns the analysis of an image sequence to derive a region-based parameter for control of the processing of the images in the sequence.

### BACKGROUND OF THE INVENTION

There are a number of image processing techniques applicable to sequences of images where information from adjacent images in the sequence is combined. The most common example is the temporal or spatio-temporal interpolation of television images. These processes are often 'adaptive' in that the processing is modified in dependence upon data that characterises individual pixels or groups of pixels forming a region in a processed image.

A very important adaptation parameter for a pixel is whether the corresponding pixel in an adjacent image in the sequence is appropriate for combination with that pixel. If the adjacent image represents a different scene (or 'shot') then it is usually advantageous to avoid such a combination. However, it is increasingly common for television programming to include material from different sources in the same image sequence. Examples include split-screen and chroma-key effects. There are known techniques for detecting 'cuts' or abrupt scene changes in television, for example that described in European patent EP 0 748 560. If these are applied to an image sequence that contains different regions derived from different image sources, a cut in one of the sources will result in modification of the processing of the whole image, including pixels where there is no cut. This often leads to visible artefacts in the regions where there is no cut.

There is therefore a need for a method of deriving a control parameter indicative of cuts in an image sequence that is applicable to particular regions of particular images within the sequence.

### SUMMARY OF THE INVENTION

In the invention pixels representing an image in a sequence that has been identified as the first image of a new shot (or the last image of an old shot) are analysed to determine whether they correspond to image regions that have undergone a shot change. By use of the invention regions within the image are identified as shot-change regions, and the remainder of the image determined as not changing to a new shot.

The invention consists in one aspect in a method and apparatus for determining a regional shot-change parameter for control of the processing of an image in a sequence of images, comprising the steps of
identifying an image as a shot-change image by analysis of the whole image
representing that image as a set of pixels
evaluating a difference measure indicative of the difference between a pixel in that image and a spatially equivalent pixel in an adjacent image in the sequence
determining that the said pixel is a shot-change pixel when the difference measure for the said pixel and the difference measure for at least one of the spatially adjacent pixels exceed a threshold
forming the said regional shot-change parameter from the determined shot-change pixels.

The step of identifying an image as a shot-change image by analysis of the whole image may be performed using a wide variety of techniques known to the skilled man. The step may have already been performed and the present invention may therefore not always need to include that step. In some cases, the present invention may be operated without any identifying of the image as a shot-change image by analysis of the whole image. This is not however the preferred option. The combination of robust, known identification of an image as a shot-change image by analysis of the whole image, together with determination - according to this invention - of a regional shot-change parameter within that shot-change image, is felt to offer important advantages.

Advantageously the determination for a pixel is refined in dependence upon the respective determinations for nearby pixels and if the pixel is spatially isolated from other pixels that have been determined as shot-change pixels, it is not regarded as a shot-change pixel.

### BRIEF DESCRIPTION OF THE DRAWINGS

An example of the invention will now be described with reference to the drawings in which:
- Figure 1: shows a flow-diagram of an image analysis process according to an example of the invention.
- Figure 2: shows the disposition of two vertically-adjacent blocks of pixels relative to a pixel of interest.
- Figure 3: shows the disposition of two horizontally-adjacent blocks of pixels relative to a pixel of interest.

### DETAILED DESCRIPTION OF THE INVENTION

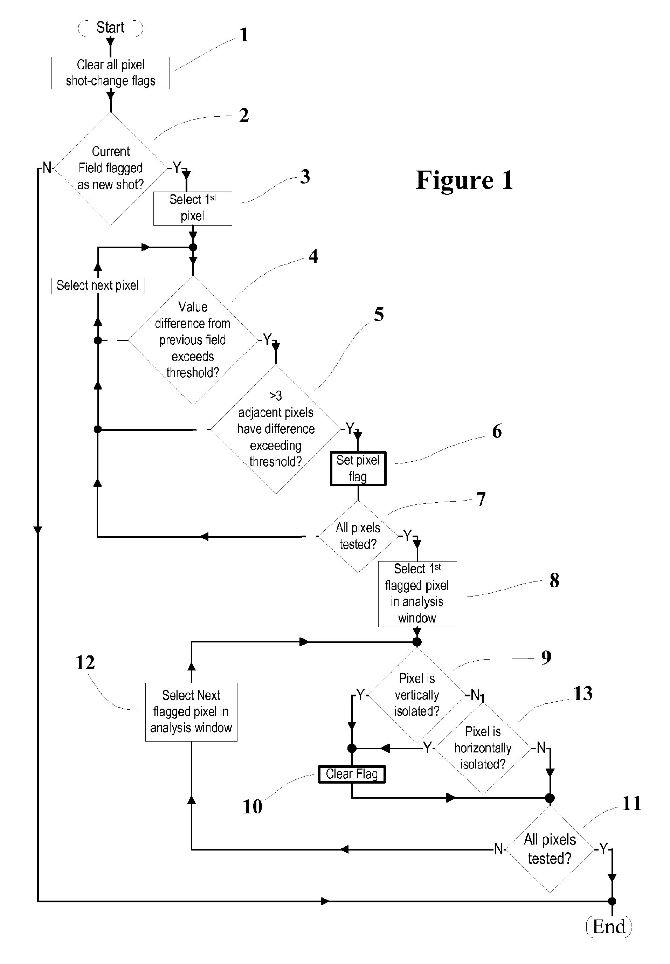

A flow-diagram of an exemplary process according to the invention is shown in Figure 1. The process operates on pixels that represent an image in a sequence. These pixels may be original pixels, or the image may be re-sampled using known methods to change the number of pixels or to create pixels from a spatially un-sampled image. Usually it is helpful to reduce the number of pixels so as to simplify the processing. The process of Figure 1 derives a 'shot-change flag' for every pixel of the processed image. Typically, all images in the sequence are processed.

In the description that follows individual images will be referred to as 'fields', as would be the case when analysing interlaced television images. Because the process makes use of comparisons between spatially coincident pixels in succeeding images, it is helpful for the sub-sampling to be spatially aligned on succeeding fields. However, in some applications adjacent images in the sequence may be frames, and the process of the invention is equally applicable.

Referring to Figure 1, in a first step (1) all the pixels' flags are cleared to indicate no shot change. In a decision step (2) the result of a known shot change detection process that analyses the whole of the image is interrogated and, if the current image has not been identified as a shot change the process is ended, leaving all the pixel shot-change flags in the 'no shot-change' state.

If the current field has been identified as a shot change, a first pixel of the field is selected in step (3). In a decision step (4) the selected pixel is compared with the spatially equivalent pixel in the preceding image, and the magnitude of the difference compared with a threshold. Usually a luminance difference value will be determined, but any other measure of pixel difference could be used. A suitable value for the luminance-difference threshold is between 1% and 2% of the difference between black and white. If the difference magnitude is less than the threshold, then the next pixel is selected for processing and step (4) is applied to that pixel.

If, however, the inter-image pixel-difference value is found to exceed the threshold in step (4), the eight spatially-adjacent pixels are also compared with their respective spatial equivalents in the preceding field, and, if more than three of these pixels have differences exceeding the threshold, the shot-change flag for the selected pixel is set in step (6) to indicate that it is involved in a shot change. Note that an orthogonal sampling structure is assumed here so that there are exactly eight pixels spatially adjacent to any pixel that is surrounded by other pixels. Pixels at the edges of the image can evaluated in the same way as other pixels, but will have fewer adjacent pixels.

The test of step (5) may use a number of adjacent pixels other than three to confirm that the pixel being analysed is a shot-change pixel. The optimum number will depend on: the spatial sampling structure of the pixels, as explained above; the degree of image sub-sampling; and, the type of images being processed. At least one adjacent pixel, and preferably a majority of the adjacent pixels must have (a) difference(s) exceeding the threshold.

This process of setting pixel shot-change flags by evaluating the magnitude of inter-field pixel-value difference magnitudes, and validating differences above the threshold with a majority vote of spatially adjacent pixels, identifies image regions where a shot change has occurred. Typically one or more regions comprising contiguous sets of pixels with the shot-change flag set are found. Because of the majority voting, these regions are generally free from small 'holes' or 'cracks'; however, there may be thin horizontal or vertical lines of spuriously flagged pixels extending from these regions.

Such thin regions are unlikely to represent genuine shot changes and it is usually helpful to identify them and remove them. Thus, once all pixels have been identified as having been tested at step (7), further processing is applied starting at step (8).

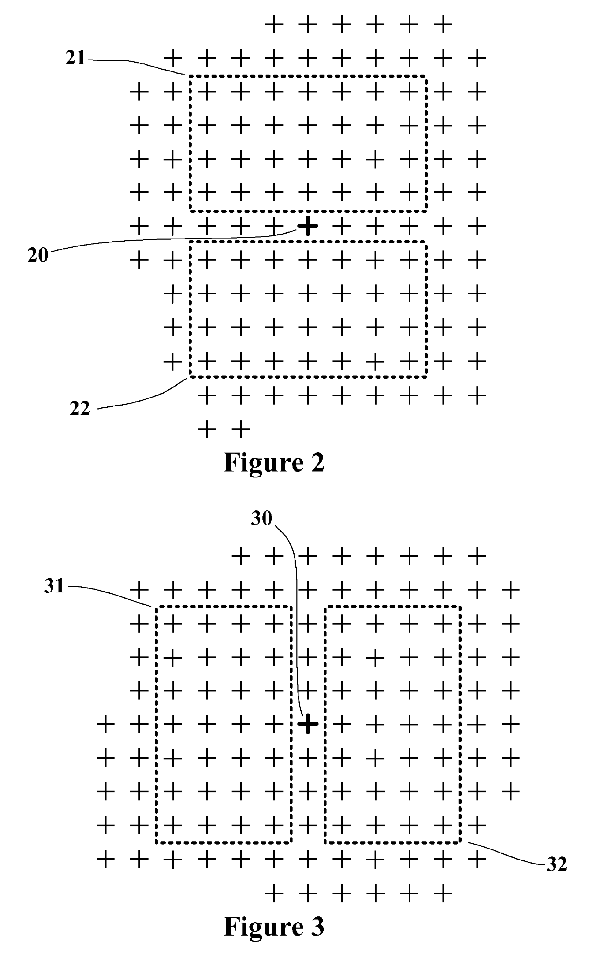

In step (8) the first, flagged pixel that falls within a 'measurement window' that excludes the edges of the image, is identified and, in step (9), a test is made to see if that pixel is vertically isolated from other flagged pixels. The test checks whether there is a block of unflagged pixels above the pixel being tested, and another block of unflagged pixels below the pixel being tested. Figure 2 shows a suitable choice for these blocks. Referring to Figure 2, a flagged pixel of interest (20) is tested for vertical isolation by checking for the presence of flagged pixels in the rectangular region (21) above the pixel (20), and checking for flagged pixels in the rectangular region (22) below the pixel (20). If flagged pixels are found in either the region (21) or the region (22), then the pixel (20) is considered not to be vertically-isolated; if no flagged pixels are found in either region then the pixel is considered to be vertically isolated.

Returning to Figure 1, if the current pixel is found to be vertically-isolated in step (9), its shot-change flag is cleared in step (10). If the current pixel is not vertically-isolated, the pixel is tested for horizontal isolation in step (13). This test is exactly analogous to the test of step (9), except that rectangular blocks of pixels on each side of the selected pixel are checked for the presence of shot-change flags.

A suitable arrangement is shown in Figure 3. If no flagged pixels exist in the block of pixels (31) to the left of the flagged pixel of interest (30), and no flagged pixels exist in the block of pixels (32) to the right of the pixel (30), then it is considered to be horizontally-isolated.

Returning to Figure 1, if the current pixel is found to be horizontally-isolated in step (13), the selected pixel's flag is cleared in step (10). The processing then moves to step (11) and, either the next untested pixels is selected in step (12), or, if all flagged pixels have been tested in step (9), the process ends. Once the end of the process is reached, the state of the pixel shot-change flags indicates those regions of the field where a shot change has taken place. This information can be used to control an adaptive video process that is applied to the field.

It should be noted that the tests for isolation in steps (9) and (13) should be made using the flags as set in step (6). That is to say that the clearance of the flags of isolated pixels in step (10) does not affect the input information to the subsequent testing of the remaining pixels, and so the process is not recursive.

If the images in the sequence have been annotated with metadata from an operator or from other automatic analysis tools, then this data may also be used in the derivation of the regional shot-change data. For example it may be known that certain parts of the images carry unchanging graphical elements or logos, and the shot-change flags can be permanently cleared in such areas.

The skilled person will appreciate that the invention can be implemented in ways that differ from the above description, and some examples follow. The test for vertical isolation and/or the test for horizontal isolation of flagged pixels can be omitted or differently implemented. Different spatial sampling patterns may be used in which different numbers of spatially-adjacent pixels are used. It may be necessary to spatially align the pixels of succeeding fields so as to compare them. The choice of the analysis window that defines which pixels are analysed may be different, or all pixels may be analysed. The processing of the invention may analyse the last field of the old shot (as determined by a known process operating on the whole field), making use of differences relative the next field of the sequence.

## Claims

1. A method of determining a regional shot-change parameter for control of the processing of an image in a sequence of images, comprising the steps of
identifying or noting the previous identification of an image as a shot-change image by analysis of the whole image;
representing that image as a set of pixels;
evaluating a difference measure indicative of the difference between a pixel in that image and a spatially equivalent pixel in an adjacent image in the sequence;
determining that the said pixel is a shot-change pixel when the difference measure for the said pixel and the difference measure for a defined number of the spatially adjacent pixels exceed a threshold; and
forming the said regional shot-change parameter from the determined shot-change pixels.

2. A method according to Claim 1 wherein the defined number comprises from two to five and preferably three of the eight spatially adjacent pixels in an orthogonal pixel grid.

3. A method according to Claim 1 or Claim 2 wherein the determination for a pixel is refined in dependence upon the respective determinations for nearby pixels and if the pixel is spatially isolated from other pixels that have been determined as shot-change pixels, it is not regarded as a shot-change pixel.

4. A method according to Claim 3 in which vertically-isolated pixels are not regarded as shot-change pixels.

5. A method according to Claim 4 in which horizontally-isolated pixels are not regarded as shot-change pixels.

6. A method according to any previous claim in which the determination of shot-change pixels is modified in dependence on metadata from another image analysis process.

7. Apparatus for determining a regional shot-change parameter for control of the processing of an image in a sequence of images, comprising:
a flag unit for flagging an image identified as a shot-change image by analysis of the whole image;
a difference evaluator for evaluating a difference measure indicative of the difference between a pixel in that image and a spatially equivalent pixel in an adjacent image in the sequence; and
an analysis unit for determining that the said pixel is a shot-change pixel when the difference measure for the said pixel and the difference measure for a defined number of the spatially adjacent pixels exceed a threshold.

8. Apparatus according to Claim 7 wherein the defined number comprises from two to five and preferably three of the eight spatially adjacent pixels in an orthogonal pixel grid.

9. Apparatus according to Claim 7 or Claim 8 wherein the determination for a pixel is refined in dependence upon the respective determinations for nearby pixels and if the pixel is spatially isolated from other pixels that have been determined as shot-change pixels, it is not regarded as a shot-change pixel.

10. Apparatus according to Claim 9 in which vertically-isolated pixels are not regarded as a shot-change pixels.

11. Apparatus according to Claim 9 in which horizontally-isolated pixels are not regarded as a shot-change pixels.

12. Apparatus according to any of Claims 7 to 11 in which the determination of shot-change pixels is modified in dependence on metadata from another image analysis process.

13. A computer program product containing instructions adapted to cause programmable apparatus to implement a method according to any one of Claims 1 to 6.
